# EUROPEAN PATENT APPLICATION

(11) **EP 4 166 222 A1**
(43) Date of publication of application: **19.04.2023**
(21) Application number: 21208861.1
(22) Date of filing: 17.11.2021
(51) Int. Cl.: B01D 61/14, A47L 11/00, B01D 63/02, B01D 71/26, B01D 71/28, B01D 71/34, B01D 71/42, B01D 71/68

(54) **HOLLOW FIBER FILTRATION CARTRIDGE AND METHODS THEREOF**

(30) Priority: 13.10.2021 TW 110138034
(71) Applicant: Full Sun International Co., Ltd., 632 Yunlin County (TW)
(72) Inventor: WU, Chang-Hsin, 632 Yunlin County (TW)
(74) Representative: Cabinet Chaillot

(57) **Abstract**

Described herein is a method of using hollow fiber filter cartridge. The method includes: providing a hollow fiber filter cartridge inside or outside an environmental cleaning equipment; allowing a wastewater to enter the hollow fiber filter cartridge from an outside of the hollow fiber filter under no water pressure or low water pressure (such as under 30gw/cm²); allowing the wastewater to cross a plurality of nanopores of the hollow fiber filter cartridge under no water pressure or low water pressure (such as under 30gw/cm²) to produce a clean water; and allowing the environmental cleaning equipment to filter wastewater to produce clean water continuously, thereby improving cleaning efficiency and reducing water consumption.

## Description

### CROSS-REFERENCE TO RELATED APPLICATIONS

The present application claims priority to Taiwanese Patent Application No.110138034, filed 13 October 2021, which is incorporated herein by reference in its entirety.

### BACKGROUND

Water consumption has always been an issue for the human race. Large quantity of water is used for cleaning on the family level and individual level.

Cleaning equipment, when being used (for example, to clean floor, doors, windows and *etc*.), requires frequent change of cleaning water. For millennia, cleaning water needs to be replaced as soon as it contacts dirty environment. This practice increases the water consumption and workload of the cleaning personnel.

Therefore, there is a need to reduce water consumption and workload spent for changing cleaning water during cleaning. The present invention addresses this need.

### SUMMARY

In some embodiments, the instant specification is directed to a method using a hollow fiber filter cartridge in an environmental cleaning equipment. In some embodiments, the hollow fiber filter cartridge is able to circularly and continuously filter wastewater. In some embodiments, the hollow fiber filter cartridge can be used in commonly available environmental cleaning equipment to filter wastewater.

In some embodiments, the hollow fiber filter cartridge is able to continuously permeate and filter large quantity of wastewater to filter out bacterial from the wastewater under no water pressure or low water pressure (such as under 30gw/cm²) environment. In some embodiments, when under no water pressure or low water pressure, wastewater enters the hollow fiber filter cartridge from outside. In some embodiments, when under no water pressure or low water pressure, wastewater passes through the nanopores on the membrane wall and exit the filter cartridge through the hollow portion of the filter cartridge. In some embodiments, an average diameter of the nanopores ranges from 100 nm to 1000 nm.

In some embodiments, the filter cartridge is able to filter 300 ml or more of wastewater per minute, and removes 99% bacteria from the wastewater.

The instant hollow fiber filter cartridge, as well as the methods thereof, is able to significantly improve the efficiencies of environmental cleaning equipment, reduce water consumption, and reduce the workload of cleaning personnel by reducing or eliminating the need to change cleaning water.

The instant specification is further directed to the following embodiment:
Embodiment 1, a method of using hollow fiber filter cartridge, the method comprising: providing a hollow fiber filter cartridge inside or outside an environmental cleaning equipment; allowing a wastewater to enter the hollow fiber filter cartridge from an outside of the hollow fiber filter under no water pressure or low water pressure; allowing the wastewater to cross a plurality of nanopores of the hollow fiber filter cartridge under no water pressure or low water pressure to produce a clean water; and allowing the environmental cleaning equipment to filter wastewater to produce clean water continuously, thereby improving cleaning efficiency and reducing water consumption.
Embodiment 2, the method of embodiment 1, wherein the hollow fiber filter cartridge comprises: a hollow fiber, wherein the hollow fiber comprises a polymer.
Embodiment 3, the method of embodiment 1, wherein the hollow fiber filter cartridge comprises a hollow fiber, and wherein the hollow fiber comprises polypropylene (PP), polyacrylonitrile (PAN), polyvinylidene difluoride (PVDF), polystyrene (PS), polysulfone (PSF), or combinations thereof.
Embodiment 4, the method of embodiment 3, wherein the hollow fiber further comprises: a graphene powder or an activated carbon powder; or a polysaccharide.
Embodiment 5, the method of embodiment 4, wherein the hollow fiber comprises the polysaccharide, wherein an amount of the polysaccharide ranges from 2wt% to 50wt% based on a total weight of a filter material, and wherein an amount of the hollow fiber ranges from 3wt% to 70wt% based on the total weight of the filter material.
Embodiment 6, the method of embodiment 4, wherein the hollow fiber comprises the polysaccharide, and the hollow fiber further comprises a bactericide metal selected from silver or zinc.
Embodiment 7, the method of embodiment 6, wherein an amount of the bactericide metal ranges from 15ppm to 1wt% based on a total amount of the polysaccharide.
Embodiment 8, the method of embodiment 1, wherein the hollow fiber filter cartridge comprises a hollow fiber, and wherein the hollow fiber has a plurality of nanopores, and wherein an average diameter of the nanopores ranges from 100 nm to 1000 nm.
Embodiment 9, the method of embodiment 1, wherein the follow fiber filter cartridge filters 300 ml or more of wastewater under no water pressure or low water pressure.
Embodiment 10, the method of embodiment 1, wherein the follow fiber filter cartridge filters out 99% of bacteria in the wastewater.
Embodiment 11, the method of embodiment 1, wherein the hollow fiber filter cartridge comprises a hollow fiber, and wherein the hollow fiber filter cartridge filters out matters having a diameter of 1000 nm or more.
Embodiment 12, the method of embodiment 1, wherein a hollow fiber of the hollow fiber filter cartridge is repeatedly cleaned to a longevity of the hollow fiber filter cartridge.

### BRIEF DESCRIPTION OF THE DRAWINGS

The following detailed description of exemplary embodiments will be better understood when read in conjunction with the appended drawings. For the purpose of illustrating, non-limiting embodiments are shown in the drawings. It should be understood, however, that the instant specification is not limited to the precise arrangements and instrumentalities of the embodiments shown in the drawings.
Fig. 1 illustrate a method of using a hollow fiber filter cartridge according to some embodiments.
Fig. 2 shows a hollow fiber filter cartridge according to some embodiments.
Fig. 3 shows a magnified hollow fiber according to some embodiments.
Fig. 4 is a scanning electron microscope (SEM) image of a hollow fiber filter cartridge in accordance with some embodiments.
Fig. 5 shows flow test results of a hollow fiber filter cartridge in accordance with some embodiments.
Fig. 6 illustrates the filtration process of a hollow fiber filter cartridge in accordance with some embodiments.
Figs. 7A-7D show the bacteria removal test of a hollow fiber filter cartridge in accordance with some embodiments.

### DETAILED DESCRIPTION

Recent years, some water change-free cleaning equipment has been developed in an attempt to replace the traditional cleaning equipment that has water storage tanks. Many of the water change-free cleaning equipment use polypropylene flat filters which are able to remove human hair or animal furs.

Hollow fiber can filter out impurities in water. Furthermore, hollow fiber filters have desirable contamination resistance and mechanical strength, and have long longevities. As such, hollow fiber filters are used in industrial wastewater treatment, biotech purification and extraction, and drinking water filtration.

Current filtration devices that use hollow fiber are designed to operate when being subjected to significant water pressures. For example, ultrafiltration or microfiltration devices that use hollow fibers normally operate under water pressures ranging from 0.5 bar to 1.0 bar (500 gw/cm² to 1000 gw/cm²). It is unknown whether hollow fiber filters are able to allow the permeation of large quantities of wastewater while removing bacteria from the wastewater, such as when under no water pressure or low water pressure (e.g., lower than 30gw/cm²). Therefore, hollow fiber filters have not been used as circulating filtration components of cleaning equipment.

The instant inventors therefore provide a novel method of using hollow fiber filter cartridges, such as a method of using hollow fiber filter cartridges in an environmental cleaning equipment, which improves conventional environmental cleaning equipment. The method allows environmental cleaning equipment to use cleaning water for cleaning, filtering the wastewater generated from the cleaning water to remove the filth and bacteria under no water pressure or low water pressure, and reuse the filtered water as cleaning water without replacing the cleaning water. The hollow fiber filter cartridge is able to filter 300ml of wastewater or more, and remove 99% of bacteria from the wastewater. The method described herein significantly improves the efficiencies of environmental cleaning equipment, reduces water consumption, and reduces the workload of cleaning personnel by reducing or eliminating the need to change cleaning water.

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

In some embodiments, the instant specification is directed to a method of using hollow fiber filter cartridge. The method includes: providing a hollow fiber filter cartridge inside or outside an environmental cleaning equipment; allowing a wastewater to enter the hollow fiber filter cartridge from an outside of the hollow fiber filter under no water pressure or low water pressure; allowing the wastewater to cross a plurality of nanopores of the hollow fiber filter cartridge under no water pressure or low water pressure to produce a clean water. According to the method, the environmental cleaning equipment is able to continuously filter wastewater to produce clean water, which can be used again to improve cleaning efficiency and reduce water consumption of the environmental cleaning equipment.

In some embodiments, the environmental cleaning equipment includes a mop, a mop bucket, a water bucket, a cleaning machine, an electric mop, a vacuum cleaning machine, or other container or device that are suitable for containing water for cleaning purposes. However, the instant specification is not limited thereto.

In some embodiments, the method of using hollow fiber filter cartridge uses hollow fiber to improve the efficiencies of the environmental cleaning equipment by ensuring that fresh cleaning water is not contaminated by residual environmental pollutant, hair, fur, and pathogenic microbes left by the replaced wastewater, which cling to the inner surface of the environmental cleaning equipment. In some embodiments, an average pore size of the hollow fiber ranges from 100 nm to 1000 nm.

In some embodiments, the hollow fiber is used alone or in combination with the environmental cleaning equipment. In some embodiments, the hollow fiber is used in public domain, industrial production area, and/or indoor areas where cleaning water is required.

In some embodiments, the hollow fiber includes polypropylene (PP), polyacrylonitrile (PAN), polyvinylidene difluoride (PVDF), polystyrene (PS) and/or polysulfone (PSF). However, the instant specification is not limited thereto.

In some embodiments, the hollow fiber is used in combination with one or more additional polymer to increase flow or filtration efficiency. For example, in some embodiments, the hollow fiber is used in combination with a powder of graphene or activated carbon, or a polysaccharide to improve the stability. Nonlimiting example of suitable polysaccharides includes chitosan. In some embodiments, when the polysaccharide is used, an amount of the polysaccharide ranges from about 2wt% to 50wt% based on a total weight of the filtration material, while an amount of the hollow fiber ranges from 3wt% to 70wt% based on a total weight of the filtration material. In some embodiments, the filtration material includes, in addition to the polysaccharide and the hollow fiber, a metal ion. In some embodiments, the inclusion of metal ions allows the filtration material to kill bacteria. Non-limiting examples of metal ions as contemplated by the instant specification includes silver and zinc ions. An amount of the metal ions, such as silver and zinc ions, ranges from 15ppm to 1wt% based on an amount of the polysaccharide.

In some embodiments, the hollow fiber of the instant specification has desirable filtration capability and is resistant to acidic or basic pHs. As such, the hollow fiber is suitable for the development of environmental cleaning applications. Since the filter, filter cartridge, filtration material and the method as described herein allows continuous generation of usable cleaning water, reduced water consumption and reduced workload for cleaning personnel, they would benefit business and people in the environmental cleaning field.

### Definitions

In the application, where an element or component is said to be included in and/or selected from a list of recited elements or components, it should be understood that the element or component can be any one of the recited elements or components and can be selected from a group consisting of two or more of the recited elements or components.

In the methods described herein, the acts can be carried out in any order, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B."

"About" as used herein when referring to a measurable value such as an amount, a temporal duration, and the like, is meant to encompass variations of ±20% or ±10%, in certain embodiments ±5%, in certain embodiments ±1%, in certain embodiments ±0.1% from the specified value, as such variations are appropriate to perform the disclosed methods.

"Low water pressure" as used herein refers to lower than about 30 gw/cm², such as about 25 gw/cm² or lower, about 20 gw/cm² or lower, about 15 gw/cm² or lower, about 10 gw/cm² or lower, about 8 gw/cm² or lower, about 6 gw/cm² or lower, about 5 gw/cm² or lower, about 4.5 gw/cm² or lower, about 4 gw/cm² or lower, about 3.5 gw/cm² or lower, about 3 gw/cm² or lower, about 2.5 gw/cm² or lower, about 2 gw/cm² or lower, about 1.5 gw/cm² or lower, about 1 gw/cm² or lower, about 0.5 gw/cm² or lower, about 0.2 gw/cm² or lower, or about 0.1 gw/cm² or lower.

"No water pressure" as used herein refers to water pressure of surface water, which often ranges from about 40 mbar to about 100 mbar i.e., about 40 gw/cm² to about 100 gw/cm², such as about 40 gw/cm², about 45 gw/cm², about 50 gw/cm², about 55 gw/cm², about 60 gw/cm², about 65 gw/cm², about 70 gw/cm², about 75 gw/cm², about 80 gw/cm², about 85 gw/cm², about 90 gw/cm², about 95 gw/cm², about 100 gw/cm². See e.g., Journal of Membrane Science Volume 377, Issues 1 - 2, 15 July 2011, p 42-53, Water Research Volume 46, Issue 10, 15 June 2012, p 3272-3282, the entirety of the reference is hereby incorporated herein by reference.

### Method of Using Hollow Fiber Filter Cartridge

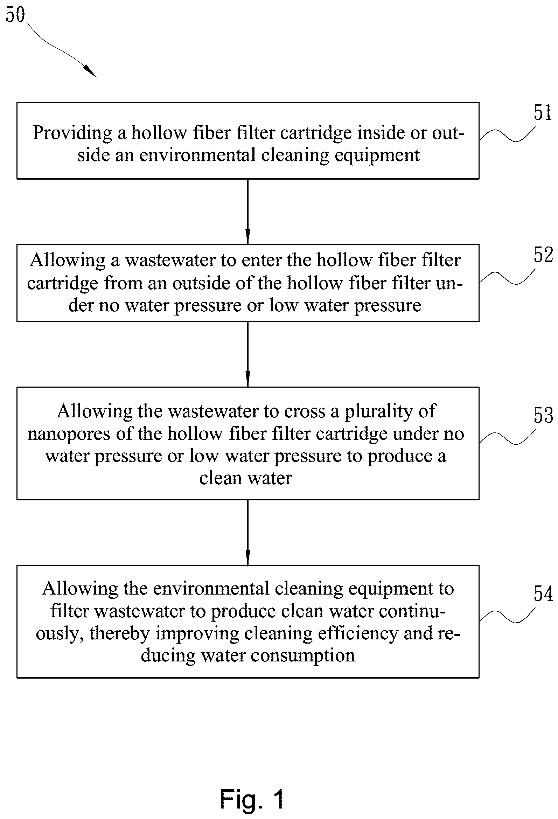

Referring to Fig. 1, in some embodiments, the present specification is directed to a method of using a hollow fiber filter cartridge. The method includes: providing a hollow fiber filter cartridge inside or outside an environmental cleaning equipment 51; allowing a wastewater to enter the hollow fiber filter cartridge from an outside of the hollow fiber filter under no water pressure or low water pressure 52; allowing the wastewater to cross a plurality of nanopores of the hollow fiber filter cartridge under no water pressure or low water pressure to produce a clean water 53; and allowing the environmental cleaning equipment to filter wastewater to produce clean water continuously, thereby improving cleaning efficiency and reducing water consumption 54, wherein a hollow fiber of the hollow fiber filter cartridge is repeatedly cleaned, thereby improving a longevity of the hollow fiber filter cartridge.

In some embodiments, the environmental cleaning equipment includes a mop, a mop bucket, a water bucket, a cleaning machine, an electric mop, a vacuum cleaning machine, and/or other container or device that are suitable for containing water for cleaning purposes, but the instant specification is not limited thereto.

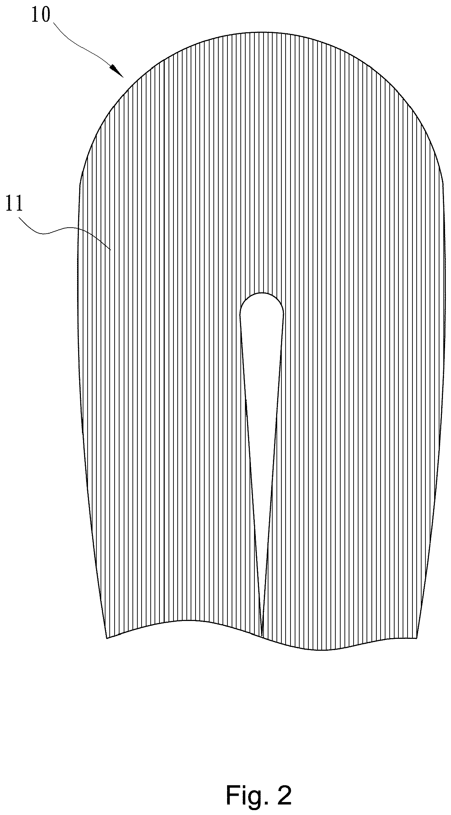

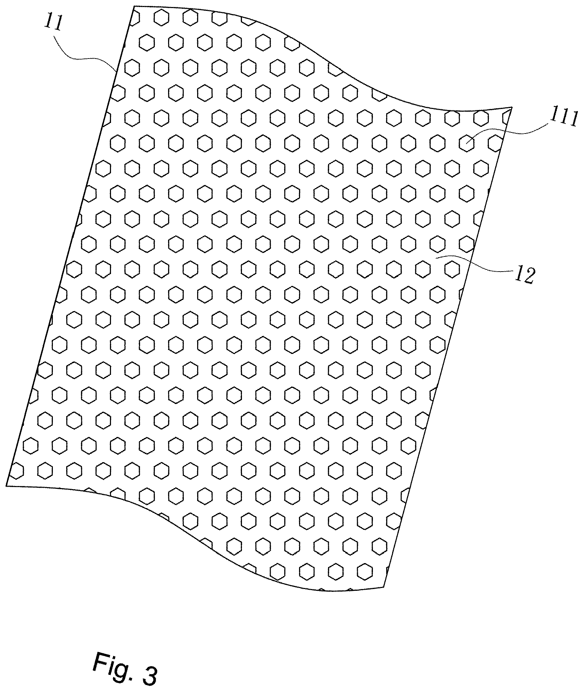

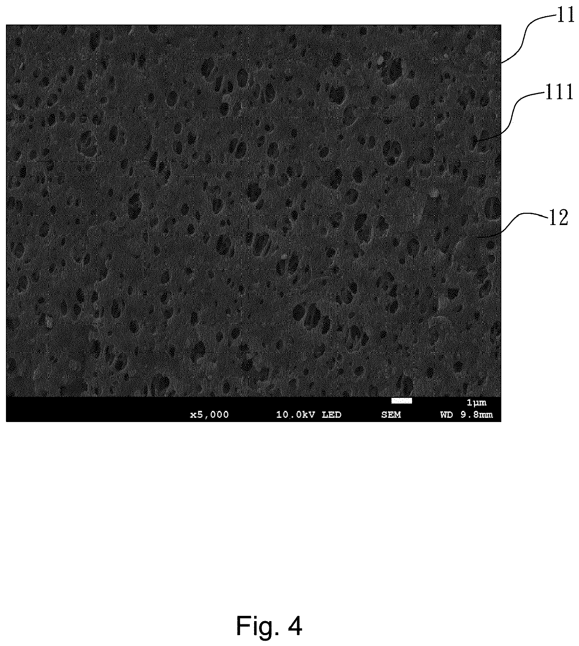

Referring to Figs. 2-4, in some embodiments, the hollow fiber filter cartridge 10 includes one or more hollow fibers 11. In some embodiments, the hollow fiber 11 comprises a polymer 12.

In some embodiments, the polymer 12 comprises a thermoplastic polymer. Non-limiting examples of the thermoplastic polymer includes polypropylene (PP), polyacrylonitrile (PAN), polyvinylidene difluoride (PVDF), polystyrene (PS) and/or polysulfone (PSF). However, the instant specification is not limited thereto.

In some embodiments, the hollow fiber 11 is used in combination with one or more additional polymer to increase flow or filtration efficiency. For example, in some embodiments, the hollow fiber is used in combination with a powder of graphene or activated carbon, or a polysaccharide to improve the stability. Nonlimiting example of suitable polysaccharides includes chitosan. In some embodiments, when the polysaccharide is used, an amount of the polysaccharide ranges from about 30wt% to 50wt% based on a total weight of the filtration material, while an amount of the hollow fiber ranges from 50wt% to 70wt% based on a total weight of the filtration material. In some embodiments, the filtration material includes, in addition to the polysaccharide and the hollow fiber, a metal ion. In some embodiments, the inclusion of metal ions allows the filtration material to kill bacteria. Non-limiting examples of metal ions as contemplated by the instant specification includes silver and zinc ions. An amount of the metal ions, such as silver and zinc ions, ranges from 15ppm to 1wt% based on an amount of the polysaccharide.

In some embodiments, the hollow fiber 11 has one or more nanopores 111. In some embodiments, an average pore size of the nanopores 111 ranges from 100 nm to 1000 nm.

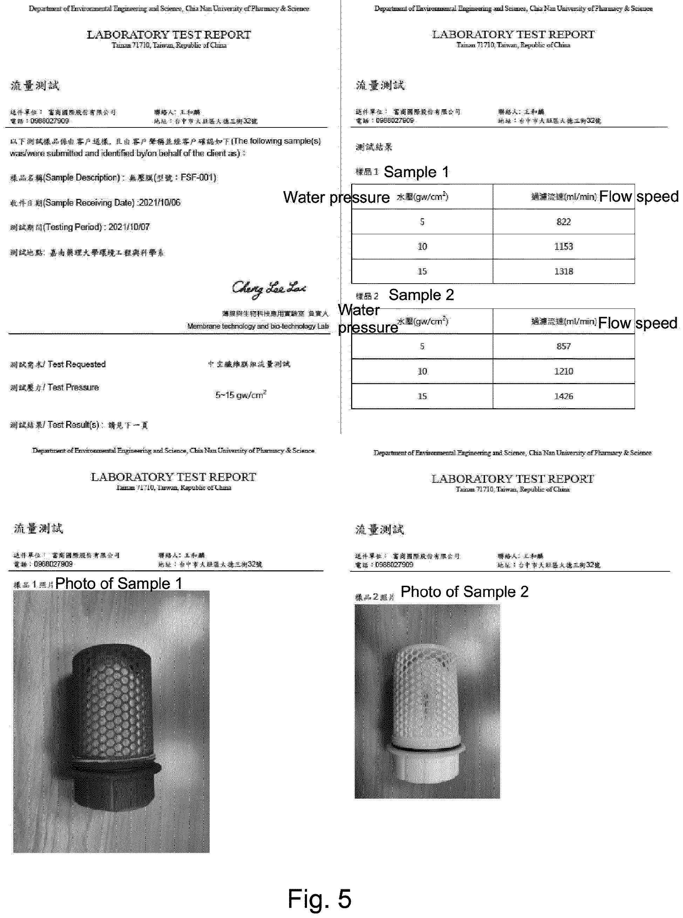

Referring to Fig. 5, as tested by Chia Nan University of Pharmacy & Science, Department of Environmental Engineering and Science, samples of hollow fiber filter cartridges according to the instant specification, when subjected to a water pressure of 5 gw/cm², has a filtration flow rate of about 800 ml/min to 900 ml/min (Sample 1: 822 ml/min, Sample 2: 877 ml/min). When subjected to a water pressure of 10 gw/cm², hollow fiber filter cartridge has a filtration flow rate of about 1100 ml/min to 1300 ml/min (Sample 1: 1153 ml/min, Sample 2: 1210 ml/min). When subjected to a water pressure of 15 gw/cm², hollow fiber filter cartridge has a filtration flow rate of about 1300 ml/min to 1500 ml/min (Sample 1: 1318 ml/min, Sample 2: 1426 ml/min). The test results show that the exemplary hollow fiber filter cartridge 10 can filter more than 300ml of wastewater per minute when under no water pressure or low water pressure.

In some embodiments, the hollow fiber filter cartridge 10 is able to filter out 99% of bacteria in wastewater.

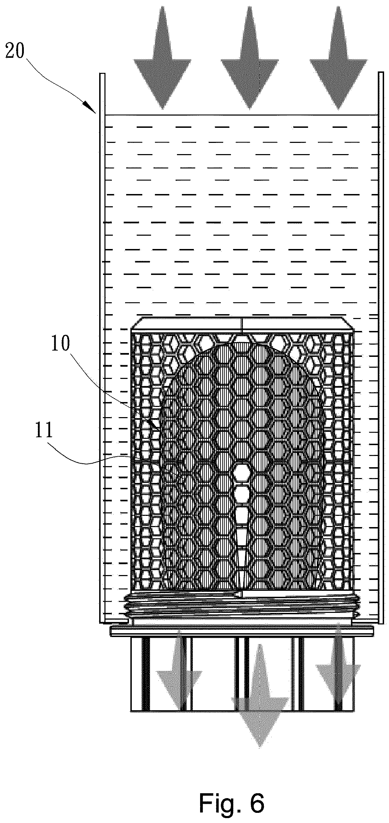

Referring to Fig. 6, in some embodiments, the hollow fiber filter cartridge 10 is inside an environmental cleaning equipment 20. When under no water pressure or low water pressure, wastewater enters the hollow fiber filter cartridge 10 from an outside. When under no water pressure or low water pressure, wastewater passes across nanopores on a plurality of hollow fiber 11 and becomes clean water. In some embodiments, the hollow fiber filter cartridge 10 is capable of filter matters having a diameter of 1000 nm or more.

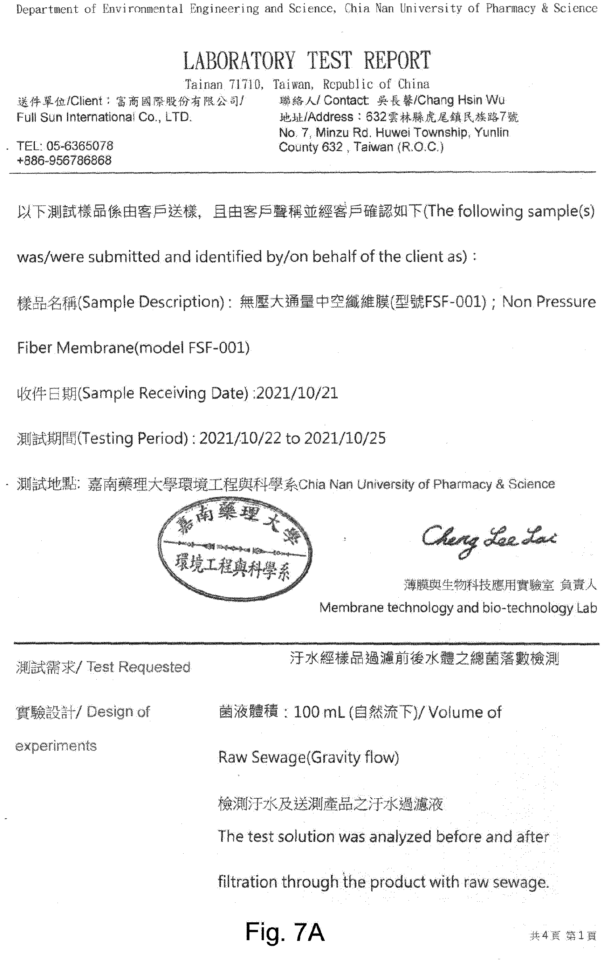

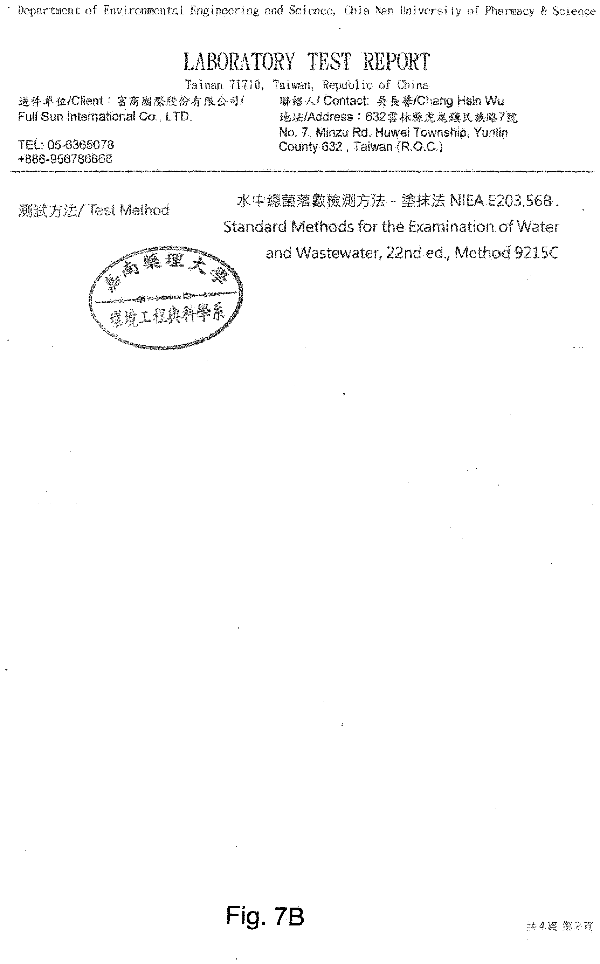

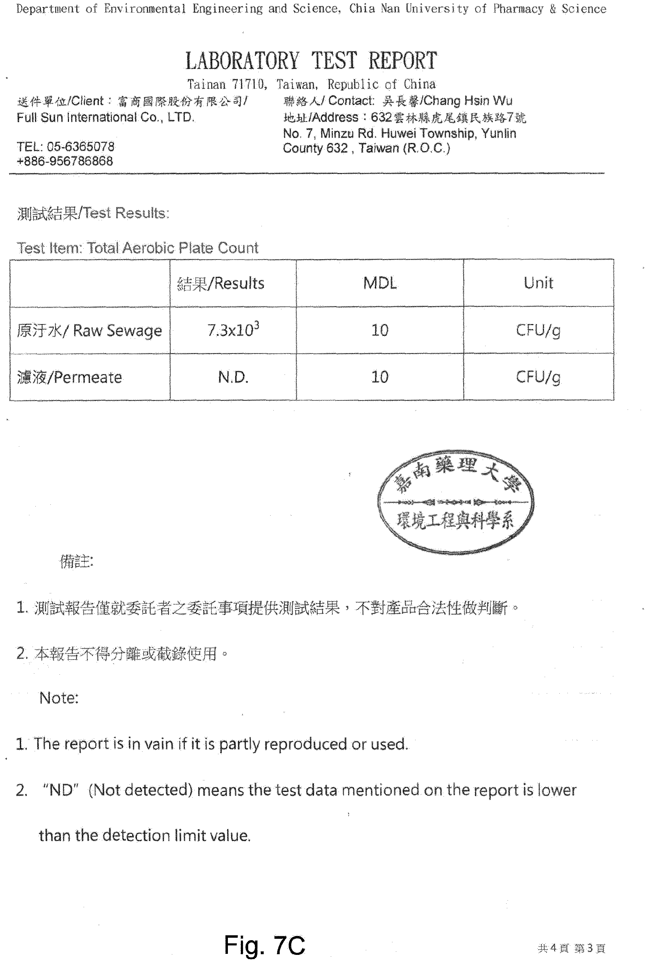

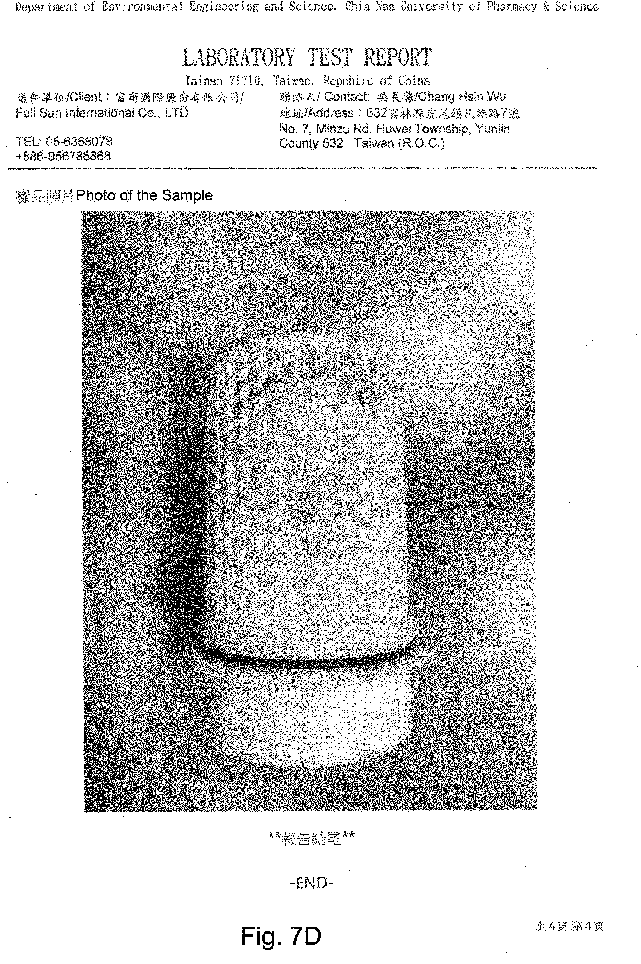

Referring to Figs. 7A-7D, as tested by Chia Nan University of Pharmacy & Science, Department of Environmental Engineering and Science, a non-limiting hollow fiber filter cartridge according to the instant specification is able to remove 99% or more of the bacteria presented in wastewater when the wastewater enters the hollow fiber filter cartridge 10 from an external side under no water pressure or low water pressure.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

### Identifiers Used in the Specification and the Figures

10: Hollow fiber filter cartridge
11: Hollow fiber
111: Nanopores
12: Polymer
20: Environmental cleaning equipment
50: Method of using a hollow fiber filter cartridge
51: Providing a hollow fiber filter cartridge inside or outside an environmental cleaning equipment
52: Allowing a wastewater to enter the hollow fiber filter cartridge from an outside of the hollow fiber filter under no water pressure or low water pressure
53: Allowing the wastewater to cross a plurality of nanopores of the hollow fiber filter cartridge under no water pressure or low water pressure to produce a clean water
54: Allowing the environmental cleaning equipment to filter wastewater to produce clean water continuously, thereby improving cleaning efficiency and reducing water consumption

## Claims

1. A method of using hollow fiber filter cartridge, the method comprising:
providing a hollow fiber filter cartridge inside or outside an environmental cleaning equipment;
allowing a wastewater to enter the hollow fiber filter cartridge from an outside of the hollow fiber filter under no water pressure or low water pressure;
allowing the wastewater to cross a plurality of nanopores of the hollow fiber filter cartridge under no water pressure or low water pressure to produce a clean water; and
allowing the environmental cleaning equipment to filter wastewater to produce clean water continuously, thereby improving cleaning efficiency and reducing water consumption.

2. The method of claim 1, wherein the hollow fiber filter cartridge comprises:
a hollow fiber,
wherein the hollow fiber comprises a polymer.

3. The method of claim 1, wherein the hollow fiber filter cartridge comprises a hollow fiber, and wherein the hollow fiber comprises polypropylene (PP), polyacrylonitrile (PAN), polyvinylidene difluoride (PVDF), polystyrene (PS), polysulfone (PSF), or combinations thereof.

4. The method of claim 3, wherein the hollow fiber further comprises:
a graphene powder or an activated carbon powder; or
a polysaccharide.

5. The method of claim 4, wherein the hollow fiber comprises the polysaccharide, wherein an amount of the polysaccharide ranges from 2wt% to 50wt% based on a total weight of a filter material, and wherein an amount of the hollow fiber ranges from 3wt% to 70wt% based on the total weight of the filter material.

6. The method of claim 4, wherein the hollow fiber comprises the polysaccharide, and the hollow fiber further comprises a bactericide metal selected from silver or zinc.

7. The method of claim 6, wherein an amount of the bactericide metal ranges from 15ppm to 1wt% based on a total amount of the polysaccharide.

8. The method of claim 1, wherein the hollow fiber filter cartridge comprises a hollow fiber, and wherein the hollow fiber has a plurality of nanopores, and wherein an average diameter of the nanopores ranges from 100 nm to 1000 nm.

9. The method of claim 1, wherein the follow fiber filter cartridge filters 300 ml or more of wastewater under no water pressure or low water pressure.

10. The method of claim 1, wherein the follow fiber filter cartridge filters out 99% of bacteria in the wastewater.

11. The method of claim 1, wherein the hollow fiber filter cartridge comprises a hollow fiber, and wherein the hollow fiber filter cartridge filters out matters having a diameter of 1000 nm or more.

12. The method of claim 1, wherein a hollow fiber of the hollow fiber filter cartridge is repeatedly cleaned to a longevity of the hollow fiber filter cartridge.
